# EUROPEAN PATENT SPECIFICATION

(11) **EP 3 296 542 B1**
(45) Date of publication and mention of the grant of the patent: **22.05.2019**
(21) Application number: 17191922.8
(22) Date of filing: 19.09.2017
(51) Int. Cl.: F02C 3/14, F02C 7/04

(54) **SPLIT COMPRESSOR TURBINE ENGINE**
GETEILTES VERDICHTERTURBINENTRIEBWERK
MOTEUR À TURBINE À DOUBLE COMPRESSEUR

(30) Priority: 19.09.2016 US 201615268713
(43) Date of publication of application: 21.03.2018
(73) Proprietor: United Technologies Corporation, Farmington, CT 06032 (US)
(72) Inventor: KUPRATIS, Daniel Bernard, Wallingford, CT Connecticut 06492 (US); KASHYAP, Tania Bhatia, West Hartford, CT Connecticut 06107 (US); ZELESKY, Mark F., Bolton, CT Connecticut 06043 (US); UTAY, Arthur W., South Windsor, CT Connecticut 06074 (US); SUCIU, Gabriel L., Glastonbury, CT Connecticut 06033 (US); SLAVENS, Thomas N., Norman, OK 73071 (US); RUGG, Kevin L., Fairfield, CT Connecticut 06824 (US); MERRY, Brian, Andover, CT Connecticut 06232 (US)
(74) Representative: Dehns

(56) References cited:
- EP-A2- 2 551 485
- DE-A1- 1 626 033
- US-A- 3 625 003

## Description

### TECHNICAL FIELD

The present disclosure relates generally to turbine engines, and more specifically to a split compressor turbine engine.

### BACKGROUND

Turbine engines generally compress air in a compressor section, and provide the compressed air to a combustor. The compressed air is mixed with a fuel, and ignited within the combustor. The resultant combustion products are passed to a turbine section, and are expanded across the turbine section. The expansion of the combustion products drives rotation of the turbine section. The turbine section is connected to the compressor section via one or more shafts, and the rotation of the turbine section, in turn, drives rotation of the compressor section.

In a typical example, the compressor section and the turbine section each include multiple compressors and turbines, respectively. The first compressor, referred to as a low pressure compressor, compresses ambient air, and provides the compressed air to the second compressor, referred to as the high pressure compressor. This arrangement is referred to as the compressors being in series, and provides compressed air to the combustor section from a single output source in the compressor section.

DE 16 26 033 A1 discloses a prior art turbine engine as set forth in the preamble of claim 1.

US 3 625 003 A discloses a prior art split compressor gas turbine.

EP 2 551 485 A2 discloses a prior art gas turbine engine with an aft core driven fan section.

### SUMMARY OF THE INVENTION

From a first aspect, the invention provides a turbine engine as recited in claim 1.

In an example of the above described turbine engine a fluid inlet of the first compressor and a fluid inlet of the second compressor are approximately equal sized, such that fluid flow into each of the first compressor and the second compressor is approximately equal.

In another example of any of the above described turbine engines at least one of the first turbine and the second turbine is a single stage turbine.

In another example of any of the above described turbine engines each of the first turbine and the second turbine is a single stage turbine.

In another example of any of the above described turbine engines the first compressor and the first turbine are connected to a first spool, and wherein the second compressor and the second turbine are connected to a second spool.

In another example of any of the above described turbine engines the first spool and the second spool are collinear.

In another example of any of the above described turbine engines the first compressor, the second compressor, the first turbine and the second turbine are connected to a single spool.

In another example of any of the above described turbine engines at least one of the first compressor and the second compressor is a direct drive compressor.

In another example of any of the above described turbine engines the first compressor and the second compressor are counter-rotating compressors.

In another example of any of the above described turbine engines the first compressor and the second compressor are co-rotating.

The invention also provides a method for driving a turbine engine as recited in claim 11.

In another example of the above described method for driving a turbine engine splitting an inlet flow between the first compressor and the second compressor, comprises splitting the inlet flow approximately evenly.

In another example of any of the above described methods for driving a turbine engine expanding the combustion products across the first turbine and the second turbine comprises expanding an output of the first turbine across the second turbine.

Another example of any of the above described methods for driving a turbine engine further includes driving rotation of the first compressor via a shaft connecting the first compressor to the first turbine, and driving rotation of the second compressor via a shaft connecting the second compressor to the second turbine.

Another example of any of the above described methods for driving a turbine engine further includes driving rotation of the first compressor and the second compressor via a shaft connecting the first compressor and the second compressor to the first turbine and the second turbine.

In another example of the above described turbine engine each of the first turbine and the second turbine are single stage turbines.

These and other features of the present invention can be best understood from the following specification and drawings, the following of which is a brief description.

### BRIEF DESCRIPTION OF THE DRAWINGS

Figure 1 schematically illustrates a split compressor turbine engine architecture according to a first example.
Figure 2 schematically illustrates a split compressor turbine engine architecture according to a second example.
Figure 3 illustrates a method for operating a gas turbine engine according to either of the examples of Figures 1 and 2.

### DETAILED DESCRIPTION OF AN EMBODIMENT

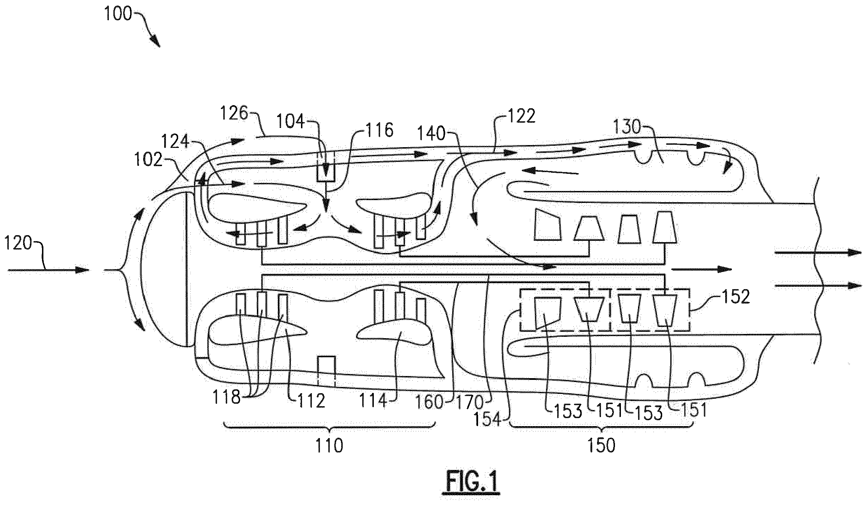

Figure 1 schematically illustrates an exemplary split compressor turbine engine architecture 100. The engine includes a pair of split compressors 112, 114 within a compressor section 110. The compressors 112, 114 share an inlet 116, and operate in fluid parallel, with the compressed air output being merged into a single compressed airflow 122 downstream of both compressors 112, 114. The inlet 116 draws ambient air from a surrounding atmosphere through a first inlet 102 on a forward end of the engine 100 and through a second inlet 104, on a radially outward surface of the engine 100.

Airflow into the engine follows flowpath 120, and branches into the first inlet 102 along a first branch 124 and into the second inlet 104 along a second branch 126. The first and second branch 124, 126 merge at the compressor section 110 inlet 116, and the flow is then split again between inlets of the first compressor 112 and the second compressor 114. In some examples, the split is approximately 50%, with each compressor 112, 114 receiving approximately the same volume of air along its respective flowpath as the other compressor 112, 114. Such an example can be achieved by providing each of the compressors 112, 114 approximately equal sized inlets, thereby ensure that an approximately equal volume of air will enter the compressors 112, 114. In alternative examples, the compressors can be sized such that different volumes of air are received at their inlets, or a controlled or passive metering device can be incorporated at the inlet 116.

Each compressor 112, 114 includes multiple compressor stages 118 that sequentially compress the air resulting in a higher pressure at the compressor outlet than at the compressor inlet 116. Each stage includes a compressor rotor and a corresponding compressor stator, with the rotors being shaped to drive air along the compressor as the rotors rotate. According to the invention, the compressor rotors are constructed of lightweight, high strength materials, such as a lightweight high strength ceramic material. According to the invention, the light weight high strength ceramic material is a silicon based structural material, such as silicon nitride, silicon carbide, silicon carbide reinforced ceramic composite, or carbon fiber reinforced silicon carbide composite.

The compressed airflow 122 is passed to a reverse flow combustor 130, where the compressed air is mixed with a fuel and ignited according to known combustor techniques. The resultant combustion products are passed along a combustion product flowpath 140 into a turbine section 150.

Within the turbine section 150 are two single stage turbines 152, 154 arranged in fluid series. Each of the single stage turbines 152, 154 includes a single rotor 151, and a single stator vane 153. In alternative examples, either or both of the turbines 152, 154 within the turbine section 150 can include multiple turbine stages, instead of the illustrated single stage turbines 152, 154.

Each rotor 151 is connected to a corresponding shaft 160, 170. The shafts 160, 170 are alternately referred to as spools. Each shaft 160, 170 connects the turbine rotor 151 to a corresponding one of the compressors 112, 114, and drives the rotation of the corresponding compressor 112, 114. In the example of Figure 1, the shafts 160, 170 are collinear, with the shaft 160 that is connected to the forward turbine 154 being radially outward of the shaft 170 that is connected to the aft turbine 152. While illustrated in Figure 1 utilizing direct drive connections to the shafts 160, 170, one of skill in the art could adapt the engine architecture 100 to utilize a geared connection, and drive one or both of the compressors 112, 114 via a geared connection.

Further, in the example of Figure 1, the turbines 152, 154 are sized such that rotation of the forward turbine 154, and rotation of the aft turbine 152, drive rotation of their corresponding compressors 112, 114 at the same, or approximately the same, speed at any given time.

In some examples, each of the compressors 112, 114 are driven to rotate in the same direction about an engine centerline axis, and are referred to as co-rotating compressors 112, 114. In alternative examples, the compressors 112, 114 rotate in opposite directions about the centerline axis, and are referred to as counter-rotating compressors 112, 114. In either example, the turbine 152, 154 corresponding to a given compressor 112, 114 rotates in the same direction as the compressor 112, 114.

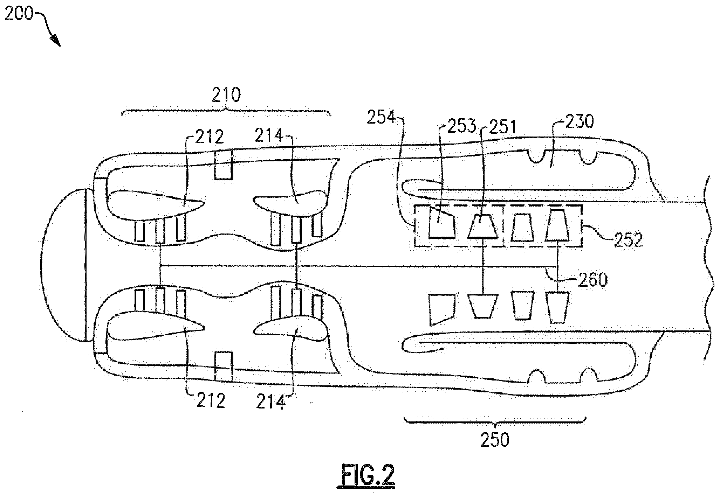

With continued reference to Figure 1, and with like numerals indicating like elements, Figure 2 schematically illustrates an alternate configuration split compressor turbine engine architecture 200. As with the first example, the architecture 200 includes two compressors 212, 214 arranged in parallel with an inlet flow to a compressor section 210 being split between the compressors 212, 214.

The output of the compressor section 210 is provided to a reverse flow combustor 230, where the compressed air from the compressor section 210 is mixed with a fuel and ignited. The resultant combustion products are provided from the reverse flow combustor 230 to a turbine section 250 including a first turbine 254 and a second turbine 252. Each of the turbines 252, 254 includes a single stage having a stator 253 and a rotor 251. In alternative examples, the turbines 252, 254 can include multiple stages and operate in a similar fashion.

Each of the turbines 252, 254 is connected to a single shaft 260. The shaft 260 is, in turn, connected to both of the compressors 212, 214 in either a direct drive (as illustrated) or a geared connection. The shaft 260 translates rotation from the turbines 252, 254 to the compressors 212, 214, thereby allowing the turbines 252, 254 to drive rotation of the compressors 212, 214.

Aside from the alternate utilization of a single shaft 260, in place of the two shaft 160, 170 arrangement of Figure 1, the engine architecture 200 of Figure 2 operates, and is configured, in fundamentally the same manner as the engine architecture of Figure 1. One of skill in the art, having the benefit of this disclosure will understand the necessary adjustments required to configure the engine architecture for a single shaft, as opposed to the two shaft example described above in greater detail.

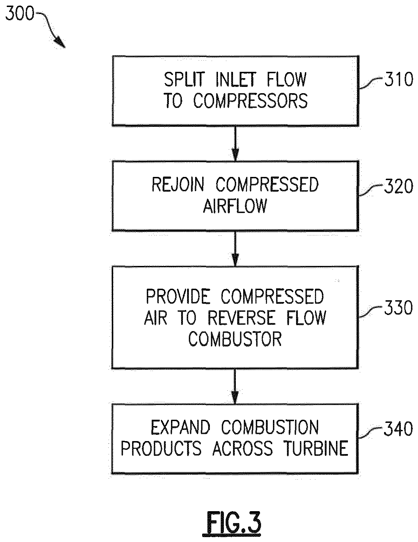

With continued reference to Figures 1 and 2, Figure 3 illustrates a method 300 for operating a split compressor turbine engine, such as the engine architectures 100, 200 of Figures 1 and 2. Initially, an airflow is provided to a split inlet, and is divided between two parallel operating compressors within a compressor section in a "Split Inlet Flow to Compressors" step 310.

The compressors operate in parallel to compress the air, and provide an output of compressed air. The compressed air output from each compressor is rejoined into a single compressed airflow in a "Rejoin Compressed Airflow" step 320.

The rejoined compressed air is provided to a reverse flow combustor and mixed with a fuel in the reverse flow combustor in a "Provide Compressed Air to Reverse Flow Combustor" step 330. The fuel/air mixture is ignited and the resultant combustion products are expelled from the reverse flow combustor according to known reverse flow combustor techniques.

The resultant combustion products are provided to a turbine section and expanded across multiple turbines within the turbine section in an "Expand Combustion Products Across Turbine" step 340. The expansion of the combustion products drives the turbines to rotate, and the rotation of the turbines is utilized to drive rotation of at least one corresponding compressor via a shaft connection. Although an embodiment of this invention has been disclosed, a worker of ordinary skill in this art would recognize that certain modifications would come within the scope of the appended claims.

## Claims

1. A turbine engine (100;200) comprising:
a first compressor (112;212) and a second compressor (114;214) fluidly parallel to the first compressor (112;212), wherein at least one of said first compressor (112;212) and said second compressor (114;214) is comprised of multiple rotors, each of said rotors being constructed of a lightweight high strength ceramic;
a reverse flow combustor (130;230) fluidly connected to said first compressor (112;212) and said second compressor (114;214); and
a first turbine (152;252) and a second turbine (154;254) fluidly in series, and fluidly connected to an output of the reverse flow combustor (130;230), **characterised in that**:
the lightweight high strength ceramic is silicon nitride, silicon carbide, silicon carbide fiber reinforced ceramic composite, or carbon fiber reinforced silicon carbide composite; and
the first and second compressors (112, 114; 212, 214) share a fluid inlet (116).

2. The turbine engine of claim 1, wherein a fluid inlet of the first compressor (112;212) and a fluid inlet of the second compressor (114;214) are approximately equal sized, such that fluid flow into each of the first compressor (112;212) and the second compressor (114;214) is approximately equal.

3. The turbine engine of claim 1 or 2, wherein at least one of said first turbine (152;252) and said second turbine (154;254) is a single stage turbine.

4. The turbine engine of any preceding claim, wherein said first compressor (112) and said first turbine (152) are connected to a first spool (170), and said second compressor (114) and said second turbine (154) are connected to a second spool (160).

5. The turbine engine of claim 4, wherein said first spool (170) and said second spool (160) are collinear.

6. The turbine engine of any preceding claim, wherein said first compressor (112) and said second compressor (114) are counter-rotating compressors.

7. The turbine engine of any of claims 1 to 3, wherein said first compressor (212), said second compressor (214), said first turbine (252) and said second turbine (254) are connected to a single spool (260).

8. The turbine engine of any of claims 1 to 5 or 7, wherein said first compressor (112;212) and said second compressor (114;214) are co-rotating.

9. The turbine engine of any preceding claim, wherein at least one of said first compressor (122;212) and said second compressor (114;214) is a direct drive compressor.

10. The turbine engine of any preceding claim, wherein each of said first turbine (152;252) and said second turbine (154;254) are single stage turbines.

11. A method for driving a turbine engine (100;200) comprising:
splitting an inlet flow (120) between a first compressor (112;212) and a second compressor (114;214) at a shared fluid inlet (116), wherein at least one of said first compressor (112;212) and said second compressor (114;214) is comprised of multiple rotors, each of said rotors being constructed of a lightweight high strength ceramic, wherein the lightweight high strength ceramic is silicon nitride, silicon carbide, silicon carbide fiber reinforced ceramic composite, or carbon fiber reinforced silicon carbide composite;
providing an output flow (122) of each of said first compressor (112;212) and said second compressor (114;214) to a reverse flow combustor (130;230); and
driving a first turbine (152;252) and a second turbine (154;254) to rotate by expanding combustion products generated in said reverse flow combustor (130;230) across the first turbine (152;252) and the second turbine (154;254).

12. The method of claim 11, wherein splitting an inlet flow (120) between the first compressor (112;212) and the second compressor (114;214) comprises splitting the inlet flow (120) approximately evenly.

13. The method of claim 11 or 12, wherein expanding the combustion products (140) across the first turbine (152;252) and the second turbine (154;254) comprises expanding an output of the first turbine (152;252) across the second turbine (154;254).

14. The method of any of claims 11 to 13, further comprising driving rotation of the first compressor (112) via a shaft (170) connecting the first compressor (112) to the first turbine (152), and driving rotation of the second compressor (114) via a shaft (160) connecting the second compressor (114) to the second turbine (154).

15. The method of any of claims 11 to 13, further comprising driving rotation of the first compressor (212) and the second compressor (214) via a shaft (260) connecting the first compressor (212) and the second compressor (214) to the first turbine (252) and the second turbine (254).

## Patentansprüche

1. Turbinentriebwerk (100; 200), umfassend:
einen ersten Verdichter (112; 212) und einen zweiten Verdichter (114; 214), der fluidisch parallel zu dem ersten Verdichter (112; 212) ist, wobei zumindest einer von dem ersten Verdichter (112; 212) und dem zweiten Verdichter (114; 214) aus mehreren Rotoren besteht, wobei jeder der Rotoren aus einer leichtgewichtigen Keramik mit hoher Stärke hergestellt ist;
eine Rückflussbrennkammer (130; 230), die fluidisch mit dem ersten Verdichter (112; 212) und dem zweiten Verdichter (114; 214) verbunden ist; und
eine erste Turbine (152; 252) und eine zweite Turbine (154; 254), die fluidisch in Reihe und fluidisch mit einer Ausgabe der Rückflussbrennkammer (130; 230) verbunden sind,
**dadurch gekennzeichnet, dass**:
die leichtgewichtige Keramik mit hoher Stärke Siliziumnitrid, Siliziumkarbid, mit Siliziumkarbidfaser verstärkter Keramikverbundstoff oder mit Kohlefaser verstärkter Siliziumkarbidverbundstoff ist; und
der erste und zweite Verdichter (112, 114; 212, 214) einen Fluideinlass (116) teilen.

2. Turbinentriebwerk nach Anspruch 1, wobei ein Fluideinlass des ersten Verdichters (112; 212) und ein Fluideinlass des zweiten Verdichters (114; 214) ungefähr gleich größenbemessen sind, sodass Fluidfluss in jeden von dem ersten Verdichter (112; 212) und dem zweiten Verdichter (114; 214) ungefähr gleich sind.

3. Turbinentriebwerk nach Anspruch 1 oder 2, wobei zumindest eine von der ersten Turbine (152; 252) und der zweiten Turbine (154; 254) eine einstufige Turbine ist.

4. Turbinentriebwerk nach einem vorhergehenden Anspruch, wobei der erste Verdichter (112) und die erste Turbine (152) mit einer ersten Spule (170) verbunden sind und der zweite Verdichter (114) und die zweite Turbine (154) mit einer zweiten Spule (160) verbunden sind.

5. Turbinentriebwerk nach Anspruch 4, wobei die erste Spule (170) und die zweite Spule (160) kollinear sind.

6. Turbinentriebwerk nach einem vorhergehenden Anspruch, wobei der erste Verdichter (112) und der zweite Verdichter (114) gegenläufig rotierende Verdichter sind.

7. Turbinentriebwerk nach einem der Ansprüche 1 bis 3, wobei der erste Verdichter (212), der zweite Verdichter (214), die erste Turbine (252) und die zweite Turbine (254) mit einer einzelnen Spule (260) verbunden sind.

8. Turbinentriebwerk nach einem der Ansprüche 1 bis 5 oder 7, wobei der erste Verdichter (112; 212) und der zweite Verdichter (114; 214) gleichsinnig rotierend sind.

9. Turbinentriebwerk nach einem vorhergehenden Anspruch, wobei zumindest einer von dem ersten Verdichter (112; 212) und dem zweiten Verdichter (114; 214) ein Direktantriebsverdichter ist.

10. Turbinentriebwerk nach einem vorhergehenden Anspruch, wobei jede von der ersten Turbine (152; 252) und der zweiten Turbine (154; 254) einstufige Turbinen sind.

11. Verfahren zum Antreiben eines Turbinentriebwerks (100; 200), umfassend:
Teilen eines Einlassflusses (120) zwischen einem ersten Verdichter (112; 212) und einem zweiten Verdichter (114; 214) an einem geteilten Fluideinlass (116), wobei zumindest einer von dem ersten Verdichter (112; 212) und dem zweiten Verdichter (114; 214) aus mehreren Rotoren besteht, wobei jeder der Rotoren aus einer leichtgewichtigen Keramik mit hoher Stärke hergestellt ist, wobei die leichtgewichtige Keramik mit hoher Stärke Siliziumnitrid, Siliziumkarbid, mit Siliziumkarbidfaser verstärkter Keramikverbundstoff oder mit Kohlefaser verstärkter Siliziumkarbidverbundstoff ist;
Bereitstellen eines Ausgangsflusses (122) von jedem von dem ersten Verdichter (112; 212) und dem zweiten Verdichter (114; 214) an eine Rückflussbrennkammer (130; 230); und
Antreiben einer ersten Turbine (152; 252) und einer zweiten Turbine (154; 254), sodass sie sich durch expandierende Verbrennungsprodukte drehen, die in der Rückflussbrennkammer (130; 230) quer über die erste Turbine (152; 252) und die zweite Turbine (154; 254) erzeugt werden.

12. Verfahren nach Anspruch 11, wobei das Teilen eines Einlassflusses (120) zwischen dem ersten Verdichter (112; 212) und dem zweiten Verdichter (114; 214) das ungefähr gleichmäßige Teilen des Einlassflusses (120) umfasst.

13. Verfahren nach Anspruch 11 oder 12, wobei das Expandieren der Verbrennungsprodukte (140) quer über die erste Turbine (152; 252) und die zweite Turbine (154; 254) das Expandieren einer Ausgabe der ersten Turbine (152; 252) quer über die zweite Turbine (154; 254) umfasst.

14. Verfahren nach einem der Ansprüche 11 bis 13, ferner umfassend das Antreiben der Rotation des ersten Verdichters (112) über eine Welle (170), die den ersten Verdichter (112) mit der ersten Turbine (152) verbindet, und das Antreiben der Rotation des zweiten Verdichters (114) über eine Welle (160), die den zweiten Verdichter (114) mit der zweiten Turbine (154) verbindet.

15. Verfahren nach einem der Ansprüche 11 bis 13, ferner umfassend das Antreiben der Rotation des ersten Verdichters (212) und des zweiten Verdichters (214) über eine Welle (260), die den ersten Verdichter (212) und den zweiten Verdichter (214) mit der ersten Turbine (252) und der zweiten Turbine (254) verbindet.

## Revendications

1. Moteur à turbine (100 ;200) comprenant :
un premier compresseur (112 ; 212) et un second compresseur (114 ; 214) fluidiquement parallèle au premier compresseur (112 ; 212), dans lequel au moins l'un dudit premier compresseur (112 ; 212) et dudit second compresseur (114 ;214) comporte plusieurs rotors, chacun desdits rotors étant constitué d'une céramique à haute résistance légère ;
une chambre de combustion à flux inversé (130 ; 230) reliée fluidiquement audit premier compresseur (112 ; 212) et audit second compresseur (114 ; 214) ; et
une première turbine (152 ; 252) et une seconde turbine (154 ; 254) fluidiquement en série , et reliées fluidiquement à une sortie de la chambre de combustion à flux inversé (130 ; 230), **caractérisé en ce que** :
la céramique à haute résistance légère est un nitrure de silicium, un carbure de silicium, un composite céramique renforcé de fibres de carbure de silicium, ou un composite de carbure de silicium renforcé de fibres de carbone ; et
les premier et second compresseurs (112, 114 ; 212, 214) partagent une entrée de fluide (116).

2. Moteur à turbine selon la revendication 1, dans lequel une entrée de fluide du premier compresseur (112 ; 212) et une entrée de fluide du second compresseur (114 ; 214) sont de dimension approximativement égale, de sorte que l'écoulement de fluide dans chacun du premier compresseur (112 ; 212) et du second compresseur (114 ; 214) est approximativement égal.

3. Moteur à turbine selon la revendication 1 ou 2, dans lequel au moins l'une de ladite première turbine (152 ; 252) et de ladite seconde turbine (154 ; 254) est une turbine à étage unique.

4. Moteur à turbine selon une quelconque revendication précédente, dans lequel ledit premier compresseur (112) et ladite première turbine (152) sont reliés à un premier corps (170), et ledit second compresseur (114) et ladite seconde turbine (154) sont reliés à un second corps (160).

5. Moteur à turbine selon la revendication 4, dans lequel ledit premier corps (170) et ledit second corps (160) sont colinéaires.

6. Moteur à turbine selon une quelconque revendication précédente, dans lequel ledit premier compresseur (112) et ledit second compresseur (114) sont des compresseurs contrarotatifs.

7. Moteur à turbine selon l'une quelconque des revendications 1 à 3, dans lequel ledit premier compresseur (212), ledit second compresseur (214), ladite première turbine (252) et ladite seconde turbine (254) sont reliés à un corps unique (260).

8. Moteur à turbine selon l'une quelconque des revendications 1 à 5 ou 7, dans lequel ledit premier compresseur (112 ; 212) et ledit second compresseur (114 ; 214) sont contrarotatifs.

9. Moteur à turbine selon une quelconque revendication précédente, dans lequel au moins l'un dudit premier compresseur (122 ; 212) et dudit second compresseur (114 ; 214) est un compresseur à entraînement direct.

10. Moteur à turbine selon une quelconque revendication précédente, dans lequel chacune de ladite première turbine (152 ; 252) et de ladite seconde turbine (154 ; 254) est une turbine à étage unique.

11. Procédé d'entraînement d'un moteur à turbine (100 ;200) comprenant :
la division d'un écoulement d'entrée (120) entre un premier compresseur (112 ; 212) et un second compresseur (114 ; 214) au niveau d'une entrée de fluide partagée (116), dans lequel au moins l'un dudit premier compresseur (112 ; 212) et dudit second compresseur (114 ; 214) comporte plusieurs rotors, chacun desdits rotors étant constitué d'une céramique à haute résistance légère, dans lequel la céramique à haute résistance légère est un nitrure de silicium, un carbure de silicium, un composite céramique renforcé de fibres de carbure de silicium, ou un composite de carbure de silicium renforcé de fibres de carbone ;
la fourniture d'un écoulement de sortie (122) de chacun dudit premier compresseur (112 ; 212) et dudit second compresseur (114 ; 214) vers une chambre de combustion à flux inversé (130 ; 230) ; et
l'entraînement d'une première turbine (152 ; 252) et d'une seconde turbine (154 ; 254) pour tourner en étendant des produits de combustion générés dans ladite chambre de combustion à flux inversé (130 ; 230) à travers la première turbine (152 ; 252) et la seconde turbine (154 ; 254).

12. Procédé selon la revendication 11, dans lequel la division d'un écoulement d'entrée (120) entre le premier compresseur (112 ; 212) et le second compresseur (114 ; 214) comprend la division de l'écoulement d'entrée (120) de manière approximativement égale.

13. Procédé selon la revendication 11 ou 12, dans lequel l'extension des produits de combustion (140) à travers la première turbine (152 ; 252) et la seconde turbine (154 ; 254) comprend l'extension d'une sortie de la première turbine (152 ; 252) à travers la seconde turbine (154 ; 254).

14. Procédé selon l'une quelconque des revendications 11 à 13, comprenant en outre l'entraînement de la rotation du premier compresseur (112) par l'intermédiaire d'un arbre (170) reliant le premier compresseur (112) à la première turbine (152), et l'entraînement de la rotation du second compresseur (114) par l'intermédiaire d'un arbre (160) reliant le second compresseur (114) à la seconde turbine (154).

15. Procédé selon l'une quelconque des revendications 11 à 13, comprenant en outre l'entraînement de la rotation du premier compresseur (212) et du second compresseur (214) par l'intermédiaire d'un arbre (260) reliant le premier compresseur (212) et le second compresseur (214) à la première turbine (252) et à la seconde turbine (254).
